(19) Europäisches Patentamt
European Patent Office
Office européen des brevets

(11) **EP 3 862 758 A1**

(12) **EUROPEAN PATENT APPLICATION**
published in accordance with Art. 153(4) EPC

(43) Date of publication:
**11.08.2021 Bulletin 2021/32**

(21) Application number: **19868452.4**

(22) Date of filing: **27.09.2019**

(51) Int Cl.:
**G01P 21/00** *(2006.01)*

(86) International application number:
**PCT/JP2019/038251**

(87) International publication number:
**WO 2020/071284 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2018 JP 2018189425**

(71) Applicant: **Sony Group Corporation Tokyo 108-0075 (JP)**

(72) Inventor: **KIMISHIMA, Masato Tokyo 108-0075 (JP)**

(74) Representative: **MFG Patentanwälte Meyer-Wildhagen Meggle-Freund Gerhard PartG mbB Amalienstraße 62 80799 München (DE)**

(54) **INFORMATION PROCESSING DEVICE, INFORMATION PROCESSING METHOD, AND PROGRAM**

(57)    A temperature characteristic of an inertial sensor is simply acquired. An information processing apparatus includes: an inertia measuring unit (110, IMU); an information processing unit (120) that performs arithmetic processing that is accompanied by a change in temperature according to a load during operation; a temperature detection unit (130) that detects temperature; a temperature control unit (143) that controls the temperature detected by the temperature detection unit by applying the load to the information processing unit to cause the information processing unit to operate; and a data acquisition unit (145) that acquires temperature characteristic data indicating a relationship between a correction value and the temperature, the correction value being used to correct a measurement value of the inertia measuring unit.

*FIG. 2*

**Description**

TECHNICAL FIELD

The present disclosure relates to an information processing apparatus, an information processing method, and a program.

BACKGROUND ART

Currently, a technique for estimating a position or an orientation of a portable terminal, such as a smartphone, on the basis of information measured by an incorporated inertial sensor or the like in the portable terminals has spread. In some cases, the inertial sensor is affected by ambient temperature, and a measurement value of the inertial sensor changes. Accordingly, a technique for correcting an influence of temperature on the inertial sensor in accordance with a temperature characteristic that has been recorded in advance has been proposed. For example, Patent Document 1 listed below relates to an inclination sensor that detects an inclination of a travelling machine body, and describes a technique for correcting a measurement value of the inclination sensor on the basis of a temperature drift characteristic that has been recorded in advance.

CITATION LIST

PATENT DOCUMENT

Patent Document 1: Japanese Patent Application Laid-Open No. 2010-268755

SUMMARY OF THE INVENTION

PROBLEMS TO BE SOLVED BY THE INVENTION

However, in the technique described in Patent Document 1 listed above, a temperature characteristic for correcting the inclination sensor needs to be acquired by performing temperature management by using a thermostatic oven or the like in a manufacturing process. Accordingly, it has been requested that a temperature characteristic of an initial sensor be acquired more simply.

SOLUTIONS TO PROBLEMS

According to the present disclosure, provided is an information processing apparatus including: an inertia measuring unit; an information processing unit that performs arithmetic processing that is accompanied by a change in temperature according to a load during operation; a temperature detection unit that detects temperature; a temperature control unit that controls the temperature detected by the temperature detection unit by applying the load to the information processing unit to cause the information processing unit to operate; and a data acquisition unit that acquires temperature characteristic data indicating a relationship between a correction value and the temperature, the correction value being used to correct a measurement value of the inertia measuring unit.

Furthermore, according to the present disclosure, provided is an information processing method including: controlling, by using a processor, a temperature detected by a temperature detection unit, by applying a predetermined load to an information processing unit to cause the information processing unit to operate, the information processing unit performing arithmetic processing that is accompanied by a change in temperature according to a load during operation; and acquiring temperature characteristic data indicating a relationship between a correction value and the temperature, the correction value being used to correct a measurement value of an inertia measuring unit.

Furthermore, according to the present disclosure, provided is a program that causes a computer to have a function including: an inertia measuring unit; an information processing unit that changes in temperature in accordance with a load during operation; a temperature detection unit that detects temperature; a temperature control unit that controls the temperature detected by the temperature detection unit by applying the load to the information processing unit to cause the information processing unit to operate; and a data acquisition unit that acquires temperature characteristic data indicating a relationship between a correction value and the temperature, the correction value being used to correct a measurement value of the inertia measuring unit.

BRIEF DESCRIPTION OF DRAWINGS

Fig. 1 is a diagram illustrating an operation situation of an information processing apparatus according to an embodiment of the present disclosure.
Fig. 2 is a block diagram illustrating a functional configuration example of the information processing apparatus according to the same embodiment.
Fig. 3 is a diagram schematically illustrating temperature control according to the same embodiment.
Fig. 4 is a diagram illustrating an example of a temperature characteristic table according to the same embodiment.
Fig. 5 is a diagram illustrating an example of acquisition of an approximate function serving as temperature characteristic data according to the same embodiment.
Fig. 6 is a flowchart illustrating an operation example of the information processing apparatus according to the same embodiment.
Fig. 7 is a flowchart illustrating temperature characteristic data acquisition possibility determination processing according to the same embodiment.
Fig. 8 is a flowchart illustrating temperature characteristic data acquisition processing according to the same embodiment.
Fig. 9 is a flowchart illustrating temperature control processing according to the same embodiment.
Fig. 10 is a flowchart illustrating correction processing according to the same embodiment.
Fig. 11 is an explanatory diagram illustrating a first variation of temperature control in the correction processing according to the same embodiment.
Fig. 12A is an explanatory diagram illustrating a change in orientation in a second variation according to the same embodiment.
Fig. 12B is an explanatory diagram illustrating a change in orientation in a third variation according to the same embodiment.
Fig. 13 is a diagram illustrating an example of an attention screen that is used in a fourth variation according to the same embodiment.
Fig. 14 is a block diagram illustrating a hardware configuration example of the information processing apparatus according to the same embodiment.

MODE FOR CARRYING OUT THE INVENTION

A preferred embodiment of the present disclosure is described in detail below with reference to the attached drawings. Note that, in the description and the drawings, components that have substantially the same functional configuration are denoted by the same reference sign, and therefore a duplicate description is omitted.
Note that description is provided in the order described below.

1. First embodiment (acquisition of temperature characteristic data and correction)

1.1. Operation situation of information processing apparatus
1.2. Functional configuration example of information processing apparatus
1.3. Operation example of information processing apparatus
1.3.1. Temperature characteristic data acquisition possibility
1.3.2. Acquisition of temperature characteristic data
1.3.3. Temperature control
1.3.4. Correction processing
1.4. Variation 1 (the case of no temperature measurement results)
1.5. Variation 2 (two-plane measurement)
1.6. Variation 3 (multi-orientation measurement)
1.7. Variation 4 (display of attention screen)

2. Hardware configuration example
3. Conclusion

<1. First embodiment (acquisition of temperature characteristic data and correction)>

[1.1. Operation situation of information processing apparatus]

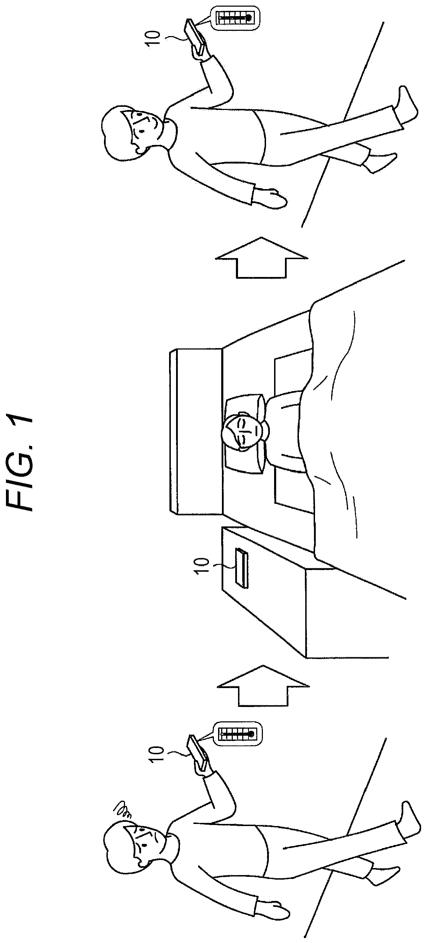

First, an operation situation of an information processing apparatus 10 according to a first embodiment of the present disclosure is described with reference to Fig. 1. Fig. 1 is a diagram illustrating an operation situation of the information processing apparatus 10 according to the embodiment of the present disclosure. Currently, in some cases, the information processing apparatus 10, such as a smartphone, is mounted with a function of estimating a position or an orientation of the information processing apparatus 10 on the basis of information measured by an incorporated inertial measurement unit (IMU) or the like.

However, the IMU is affected by ambient temperature of the IMU, and an output characteristic, such as a bias value, a scale factor, or alignment, changes. As a result, a measurement value of the IMU varies depending on ambient temperature in some cases. Therefore, a position or an orientation of the information processing apparatus 10 is incorrectly detected in some cases (see a left-hand portion of Fig. 1). For example, in a case where the IMU is used for a navigation function of a user, in some cases, it is detected on the basis of a measurement value of the IMU as if the information processing apparatus 10 were moving, although the information processing apparatus 10 itself is stationary.

Accordingly, in the present disclosure, information relating to a temperature characteristic (temperature characteristic data) of the IMU is acquired by the information processing apparatus 10. For example, as illustrated in the center of Fig. 1, in a situation where a user is not using the information processing apparatus 10 (for example, while the user is sleeping), a temperature inside the information processing apparatus 10 including the periphery of the IMU is controlled, and temperature characteristic data of the IMU is acquired.

Thereafter, a measurement value of the IMU can be corrected on the basis of the acquired temperature characteristic data, and can be used in the information processing apparatus 10. For example, when a user uses the navigation function of the information processing apparatus 10, the measurement value of the IMU is corrected on the basis of the temperature characteristic data of the IMU (see a righthand portion of Fig. 1). As a result, the information processing apparatus 10 can provide a more precise position/orientation estimation function.

[1.2. Functional configuration example of information processing apparatus]

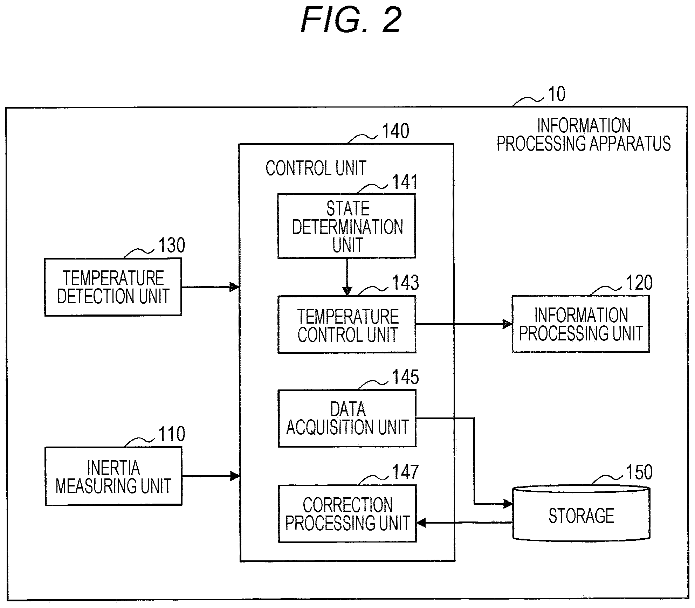

Next, a functional configuration example of the information processing apparatus 10 according to the embodiment of the present disclosure is described with reference to Figs. 2 to 5. Fig. 2 is a block diagram illustrating the functional configuration example of the information processing apparatus 10 according to the embodiment of the present disclosure.

As illustrated in Fig. 2, the information processing apparatus 10 according to the embodiment of the present disclosure includes an inertia measuring unit 110, an information processing unit 120, a temperature detection unit 130, a control unit 140, and a storage 150.

Examples of the information processing apparatus 10 include a smartphone, a tablet terminal, a wearable terminal, and the like that are mounted with a function of estimating a position or an orientation of a terminal.

(1) Inertia measuring unit 110

The inertia measuring unit 110 has a function of measuring inertia data relating to the information processing apparatus 10. The inertia measuring unit 110 includes an inertial measurement unit (IMU) as a device that can measure the inertia data. The inertial measurement unit includes an acceleration sensor, and measures, as one example of the inertia data, acceleration serving as a change amount of the speed of movement of the information processing apparatus 10. Furthermore, the inertial measurement unit includes an angular velocity sensor, and measures, as one example of the inertia data, angular velocity serving as a change amount of an orientation of the information processing apparatus 10. The inertia measuring unit 110 outputs the inertia data measured by the inertial measurement unit to the control unit 140.

(2) Information processing unit 120

The information processing unit 120 has a function of performing arithmetic processing in the information processing apparatus 10. In performing arithmetic processing, the information processing unit 120 changes in temperature in accordance with a load during the operation. A temperature around the inertia measuring unit 110 changes according to a change in temperature of the information processing unit 120. Examples of the information processing unit 120 include a central processing unit (CPU) and a communication device.

(3) Temperature detection unit 130

The temperature detection unit 130 has a function of detecting a temperature inside the information processing apparatus 10. In particular, the temperature detection unit 130 can detect a temperature of the inertia measuring unit 110 itself or an ambient temperature of the inertia measuring unit 110.

(4) Control unit 140

The control unit 140 has a function of controlling the entirety of the information processing apparatus 10. For example, the control unit 140 acquires a measurement value of the inertia measuring unit 110. Furthermore, the control unit 140 acquires a temperature detection result of the temperature detection unit 130.

Furthermore, the control unit 140 controls storage processing of the storage 150. Specifically, the control unit 140 causes the storage 150 to store information that has been output according to processing performed by the control unit 140.

Furthermore, the control unit 140 has a function of performing processing based on input information.

Furthermore, the control unit 140 includes a state determination unit 141, a temperature control unit 143, a data acquisition unit 145, and a correction processing unit 147, as illustrated in Fig. 2.

(State determination unit 141)

The state determination unit 141 has a function of determining whether or not it is possible to acquire temperature characteristic data. In this determination, the state determination unit 141 can determine whether or not the information processing apparatus 10 is stationary. The state determination unit 141 can determine whether or not the information processing apparatus 10 is stationary, on the basis of a measurement value of the inertia measuring unit 110. For example, when a variance value within a predetermined time period of an acceleration measured by the inertia measuring unit 110 is less than or equal to a predetermined value, the state determination unit 141 can determine that the information processing apparatus 10 is stationary.

Before temperature characteristic data is acquired, the state determination unit 141 determines that the information processing apparatus 10 is stationary, and this suppresses an unnecessary vibration component or motion component being reflected in a measurement result, and the precision of temperature characteristic data to be acquired is improved.

Furthermore, in determining whether or not it is possible to acquire temperature characteristic data, the state determination unit 141 can determine whether or not the information processing apparatus 10 is being used by a user. Before the temperature characteristic data is acquired, the state determination unit 141 determines a use state of the information processing apparatus 10, and this suppresses an influence on the user of a change in temperature or an increase in power consumption during acquisition of the temperature characteristic data.

In determining the use state of the information processing apparatus 10, the state determination unit 141 can determine whether or not the user is sleeping. The state determination unit 141 can determine that the user is sleeping, for example, on the basis of the current time. Furthermore, the state determination unit 141 can determine that the user is sleeping, on the basis of the user's physical information such as a pulse wave. Furthermore, the state determination unit 141 can detect a movement of the user on the basis of a measurement value of the inertia measuring unit 110, and can determine that the user is sleeping, in a case where there is a small movement or no movement of the user.

In determining the use state of the information processing apparatus 10, the state determination unit 141 determines whether or not the user is sleeping. Therefore, it is determined more accurately that the user is not using the information processing apparatus 10.

Furthermore, in determining the use state of the information processing apparatus 10, the state determination unit 141 can determine whether or not the information processing apparatus 10 is located in the user's living base such as the user's house. In particular, the state determination unit 141 estimates a current position of the information processing apparatus 10 on the basis of positional information, a wireless communication environment, or the like of the information processing apparatus 10. The state determination unit 141 can determine whether or not the information processing apparatus 10 is located in the user's living base, on the basis of this estimation result.

In determining the use state of the information processing apparatus 10, the state determination unit 141 determines whether or not the information processing apparatus 10 is located in the user's living base, and this suppresses an influence on the user of a change in temperature or an increase in power consumption during acquisition of the temperature characteristic data.

Furthermore, in determining the use state of the information processing apparatus 10, the state determination unit 141 can perform determination on the basis of an operation state of an application or the like in the information processing apparatus 10. In particular, the state determination unit 141 can estimate the operation state of the application on the basis of a CPU use rate of processing relating to the application in the information processing apparatus 10. In a case where the CPU use rate is low, the state determination unit 141 can determine that the user is not using the information processing apparatus 10. By doing this, the use state of the information processing apparatus 10 is determined more accurately.

Furthermore, in determining whether or not it is possible to acquire temperature characteristic data, the state determination unit 141 can determine whether or not a battery residual amount of the information processing apparatus 10 satisfies predetermined conditions. Examples of the predetermined conditions include whether or not the battery residual amount is greater than or equal to 80% of a battery residual amount in a fully charged state, whether or not a battery is being charged, and the like.

In determining whether or not it is possible to acquire temperature characteristic data, the state determination unit 141 determines the battery residual amount of the information processing apparatus 10, and this suppresses an influence on the user of an increase in power consumption during acquisition of the temperature characteristic data.

Furthermore, in determining whether or not it is possible to acquire the temperature characteristic data, the state determination unit 141 can determine whether or the user has authorized acquisition of the temperature characteristic data of the inertia measuring unit 110. If the user has issued authorization, it is not necessary to consider an influence on the user during acquisition of the temperature characteristic data.

(Temperature control unit 143)

The temperature control unit 143 causes the information processing unit 120 to perform arithmetic processing to control a temperature that changes according to a change in temperature of the information processing unit 120 and is detected by the temperature detection unit 130.

An example of the arithmetic processing performed by the information processing unit 120 is processing for performing control to repeatedly perform simple calculation such as sequentially adding an integer from 1, in a case where the information processing unit 120 is a central processing unit. Furthermore, in a case where the information processing unit 120 is a communication device, an example of the arithmetic processing is processing for performing control to repeatedly performing communication with an outside, or the like. In particular, in a case where the communication device is a GPS reception device, an example of the arithmetic processing is processing for performing control to repeatedly perform a positioning operation of the information processing apparatus 10, or the like.

The temperature control unit 143 performs temperature control by using the information processing unit 120 that performs arithmetic processing in the information processing apparatus 10. Accordingly, an element for temperature control does not need to be separately provided in the information processing apparatus 10. In particular, in a case where the information processing unit 120 is a central processing unit or a communication device, both the central processing unit and the communication device are elements that are provided in the information processing apparatus 10 in many cases. By using these elements, an element for temperature control does not need to be separately provided. Moreover, both the central processing unit and the communication device are elements having a relatively large heat generation amount, and a rise in temperature can increase in temperature control.

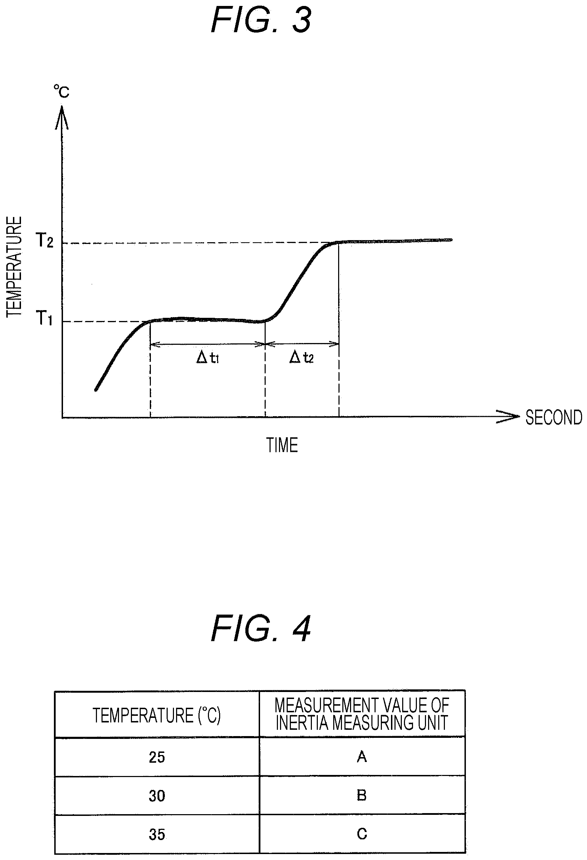

Specifically, the temperature control unit 143 controls the operation frequency of the information processing unit 120 or a load to be applied to the information processing unit 120 on the basis of a temperature detected by the temperature detection unit 130 and a target temperature. Furthermore, in changing temperature, the temperature control unit 143 controls the operation frequency of the information processing unit 120 or the load to be applied to the information processing unit 120 in such a way that the speed of a change in a temperature detected by the temperature detection unit 130 does not exceed a threshold. Temperature control performed by the temperature control unit 143 according to the present embodiment is further described below with reference to Fig. 3.

(Temperature control)

Fig. 3 is a diagram schematically illustrating temperature control according to the present embodiment. As illustrated in Fig. 3, the temperature control unit 143 applies a load to the information processing unit 120, and a temperature to be detected by the temperature detection unit 130 is controlled. First, temperature is controlled to be kept constant at a first temperature $T_1$ during a certain time period $\Delta t_1$. Next, temperature is controlled to change from the first temperature $T_1$ to a second temperature $T_2$. At this time, temperature control can be performed in such a way that the speed of a change in temperature $(T_2 - T_1)/\Delta t_2$ is less than or equal to a threshold. Moreover, in changing temperature, control can be performed in such a way that a difference between the maximum value and the minimum value of temperature is greater than or equal to a predetermined value. For example, control can be performed in such a way that a difference between the maximum value and the minimum value of temperature is greater than or equal to 20°C. Temperature control performed by the temperature control unit 143 has been described above with reference to Fig. 3.

In temperature control, temperature is kept constant during a certain time period, and therefore the inertia measuring unit 110 performs measurement in a stable temperature state. This results in further improvements in the precision of the temperature characteristic data. Furthermore, in temperature control, control is performed in such a way that the speed of a change in temperature is less than or equal to a threshold. This suppresses an influence of a sudden change in temperature on a temperature characteristic of the inertia measuring unit 110. Furthermore, in temperature control, control is performed in such a way that a difference between the maximum value and the minimum value of temperature is greater than or equal to 20°C. By doing this, a temperature range of the temperature characteristic data is sufficiently secured, and this results in improvements in the precision of the temperature characteristic data.

Furthermore, the temperature control unit 143 has a function of starting temperature control in a case where the state determination unit 141 has determined that the information processing apparatus 10 is in a state where it is possible to acquire the temperature characteristic data. Specifically, the state determination unit 141 outputs a determination result indicating that the information processing apparatus 10 is in a state where it is possible to acquire the temperature characteristic data. Thereafter, the temperature control unit 143 applies a load to the information processing unit 120 to cause the information processing unit 120 to operate. The temperature control unit 143 starts temperature control in a state where it is possible to acquire the temperature characteristic data. Therefore, temperature control is not started at a time that is inconvenient for a user.

(Data acquisition unit 145)

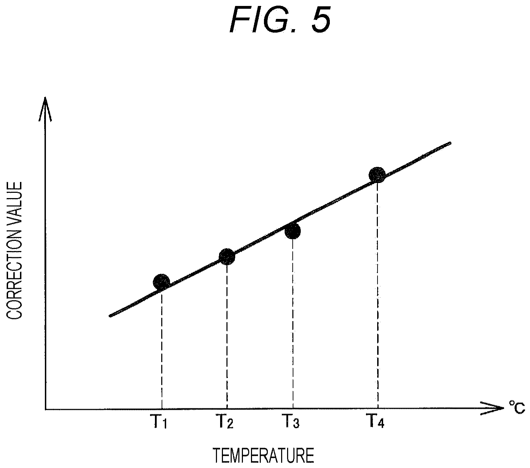

The data acquisition unit 145 has a function of acquiring temperature characteristic data indicating a relationship between a correction value for correcting a measurement value of the inertia measuring unit 110 and a temperature detected by the temperature detection unit 130. Specific acquisition of the temperature characteristic data is described below with reference to Figs. 4 and 5.

(Acquisition of temperature characteristic table)

As illustrated in Fig. 3, a temperature to be detected by the temperature detection unit 130 is controlled, and when the temperature is stable at a certain temperature (for example, $T_1$ in Fig. 3), a measurement value of the inertia measuring unit 110 is acquired by the data acquisition unit 145. Fig. 4 is a diagram illustrating an example of a temperature characteristic table according to the present embodiment. As illustrated in Fig. 4, the inertia measuring unit 110 performs measurement while temperature is controlled, and therefore a measurement value of the inertia measuring unit 110 that corresponds to a specified temperature is obtained.

(Acquisition of temperature characteristic data)

Moreover, the data acquisition unit 145 obtains an approximate function according to a least-squares method by using a temperature and a measurement value that have already been acquired, in order to interpolate a temperature range having no measurement results in the temperature characteristic table obtained in Fig. 4. Fig. 5 is a diagram illustrating an example of acquisition of an approximate function serving as temperature characteristic data. As illustrated in Fig. 5, it is assumed that the approximation of a linear function is established in a relationship between temperature and a measurement value based on the temperature characteristic table. In this case, the data acquisition unit 145 performs arithmetic processing for obtaining an approximate function by using the formula described below according to the least-squares method.

Here, the inclination a in the approximate function y = ax + b is obtained according to the following formula.

[Math. 1]

$$a = \frac{n \sum_{i=1}^{n} x_i y_i - \sum_{i=1}^{n} x_i \sum_{i=1}^{n} y_i}{n \sum_{i=1}^{n} x_i^2 - \left(\sum_{i=1}^{n} x_i\right)^2}$$

... Formula (1)

Moreover, the intercept b is obtained according to the following formula.

[Math. 2]

$$b = \frac{\sum_{i=1}^{n} x_i^2 \sum_{i=1}^{n} y_i - \sum_{i=1}^{n} x_i y_i \sum_{i=1}^{n} x_i}{n \sum_{i=1}^{n} x_i^2 - \left(\sum_{i=1}^{n} x_i\right)^2}$$

... Formula (2)

In the formula described above, n is the number of measurement points. The data acquisition unit 145 acquires the approximate function obtained as described above as temperature characteristic data indicating a relationship between temperature and a correction value. By determining the approximate function to be temperature characteristic data, a temperature range having no measurement results can be interpolated. Accordingly, even in a case where a small number of temperatures have been measured, temperature characteristic data that can cope with a wide temperature range can be obtained.

The data acquisition unit 145 can acquire, as temperature characteristic data, an approximate function based on measurement values that have been acquired by the inertia measuring unit at at least two or more temperatures. Furthermore, in order to accurately obtain an approximate function, the data acquisition unit 145 can acquire, as temperature characteristic data, an approximate function based on measurement values that have been acquired by the inertia measuring unit 110 at at least four or more temperatures. The data acquisition unit 145 stores the temperature characteristic data in the storage 150.

Note that, as a method for acquiring an approximate function, a method other than the least-squares method can be used. Furthermore, as the approximate function, a function in a form that is different from a linear function can be obtained.

Temperature characteristic data of the inertia measuring unit 110 is acquired by the data acquisition unit 145 inside the information processing apparatus 10, and therefore the temperature characteristic data is simply acquired in the information processing apparatus 10. In particular, in a process of manufacturing the information processing apparatus 10, equipment, such as a thermostatic oven, that is needed to acquire the temperature characteristic data is not needed.

The data acquisition unit 145 can acquire a bias value (a gyroscopic bias value) of an angular velocity detected by a gyroscopic sensor, as a measurement value of the inertia measuring unit 110. This is because, in inertia data acquired by the inertia measuring unit 110, the gyroscopic bias value detected by the gyroscopic sensor significantly affects, in particular, a position/orientation estimation function in the information processing apparatus 10, and correction needs to be performed by using temperature characteristic data. The data acquisition unit 145 acquires gyroscopic bias temperature characteristic data indicating a relationship between a gyroscopic bias correction value for correcting the gyroscopic bias value and temperature, on the basis of the acquired gyroscopic bias value.

(Correction processing unit 147)

The correction processing unit 147 has a function of correcting a measurement value measured by the inertia measuring unit 110 on the basis of a correction value obtained from a temperature detected by the temperature detection unit 130 and the temperature characteristic data. Specifically, the correction processing unit 147 calculates a correction value from the detected temperature and the temperature characteristic data. The correction processing unit 147 performs arithmetic processing for correcting a measurement value of the inertia measuring unit 110, by using the calculated correction value.

Moreover, the correction processing unit 147 can have a function of correcting an angular velocity detected by the gyroscopic sensor, on the basis of a gyroscopic bias correction value obtained from a temperature detected by the temperature detection unit 130 and the gyroscopic bias temperature characteristic data. Specifically, the correction processing unit 147 calculates a gyroscopic bias correction value from the detected temperature and the temperature characteristic data. The correction processing unit 147 performs arithmetic processing for correcting an angular velocity measured by the gyroscopic sensor of the inertia measuring unit 110, by using the calculated gyroscopic bias correction value. Stated another way, the correction processing unit 147 further has a function of a gyroscopic correction processing unit 149 that corrects an angular velocity detected by the gyroscopic sensor on the basis of a gyroscopic bias correction value obtained from a temperature detected by the temperature detection unit 130 and the gyroscopic bias temperature characteristic data.

A measurement value of the inertia measuring unit 110 is corrected by the correction processing unit 147, and therefore the information processing apparatus 10 is provided with a function of estimating a more accurate position or orientation.

(5) Storage 150

The storage 150 has a function of storing data acquired in processing performed by the information processing apparatus 10. For example, the storage 150 stores the temperature characteristic data acquired by the data acquisition unit 145.

A functional configuration example of the information processing apparatus 10 according to the embodiment of the present disclosure has been described above with reference to Figs. 2 to 5. An operation example of the information processing apparatus 10 according to the embodiment of the present disclosure is described.

[1.3. Operation example of information processing apparatus]

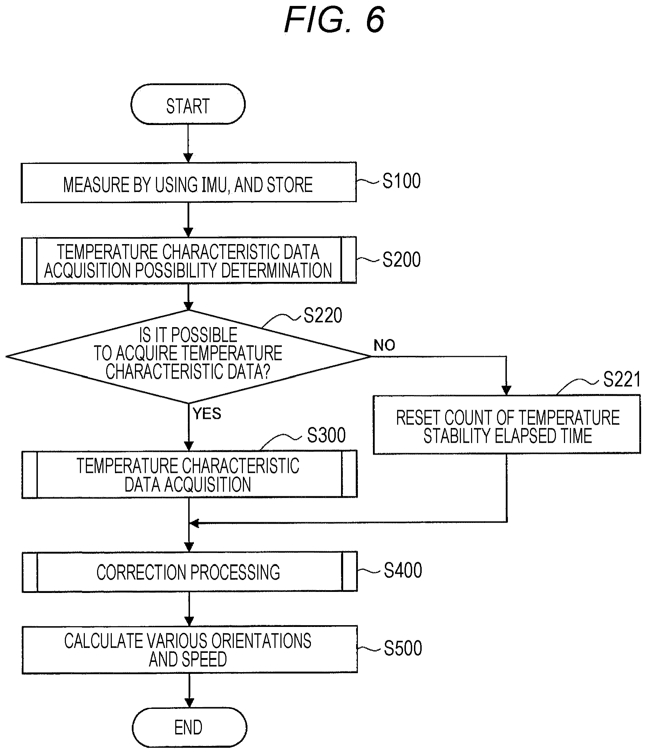

An operation example of the information processing apparatus 10 according to the embodiment of the present disclosure is described below with reference to Figs. 6 to 10. Fig. 6 is a flowchart illustrating the operation example of the information processing apparatus 10 according to the embodiment of the present disclosure.

As illustrated in Fig. 6, first, the inertia measuring unit 110 measures inertia data such as acceleration or angular velocity, and outputs a measurement value to the control unit 140. The control unit 140 stores the measurement value in the storage 150 (S100). Next, the state determination unit 141 determines whether or not the information processing apparatus 10 is in a state where it is possible to acquire temperature characteristic data (S200). In a case where the state determination unit 141 has determined that it is possible to acquire the temperature characteristic data, the data acquisition unit 145 acquires the temperature characteristic data (S300). In contrast, in step S200, in a case where it has not been determined that it is possible to acquire the temperature characteristic data, a count of a temperature stability elapsed time is reset (S221). Thereafter, the correction processing unit 147 performs processing for correcting the measurement value of the inertia measuring unit 110 (S400). Finally, the control unit 140 calculates an orientation and the speed of movement of the information processing apparatus 10, by using a corrected measurement result of the inertia measuring unit 110 (S500), and the processing performed by the information processing apparatus 10 is terminated.

A flowchart illustrating the entirety of an operation example of the information processing apparatus 10 according to the embodiment of the present disclosure has been described above. The processing in step S200, step S300, step S303, and step S400 is described below.

[1.3.1. Temperature characteristic data acquisition possibility]

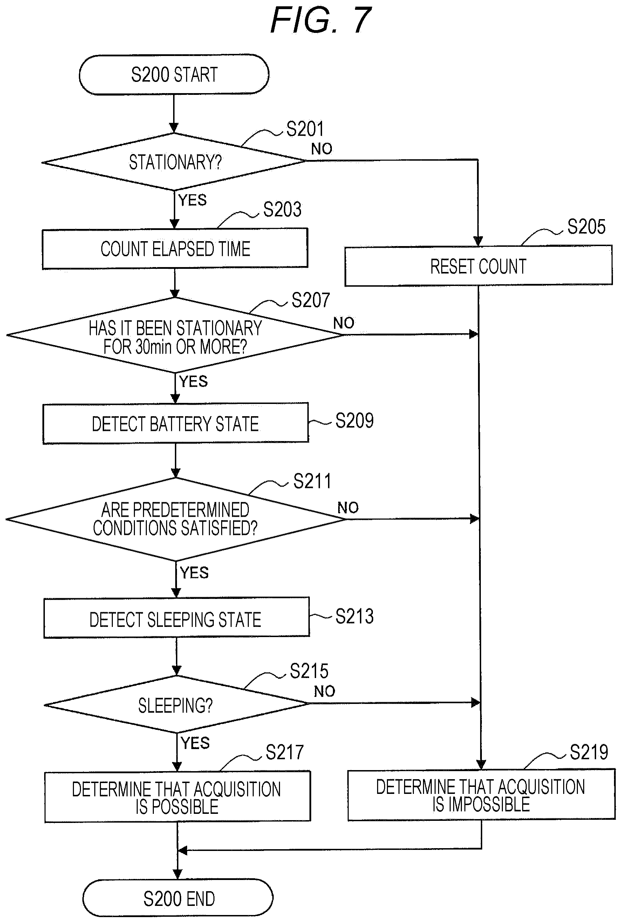

The temperature characteristic data acquisition possibility determination processing of step S200 is described with reference to Fig. 7. Fig. 7 is a flowchart relating to the temperature characteristic data acquisition possibility determination processing. First, the state determination unit 141 determines whether or not the information processing apparatus 10 is in a stationary state, on the basis of a measurement value of the inertia measuring unit 110 (S201). In step S201, in a case where it has been determined that the information processing apparatus 10 is in the stationary state, an elapsed time in the stationary state is counted (S203).

In the determination of step S201 as to whether or not the information processing apparatus 10 is in the stationary state, a measurement value of the inertia measuring unit 110 is used. For example, it can be determined whether or not a variance value of an acceleration value for one second that has been measured by the inertia measuring unit 110 is less than or equal to a predetermined threshold. In a case where a variance value of acceleration is less than or equal to a predetermined threshold, it is determined in step S201 that the information processing apparatus 10 is in the stationary state.

In contrast, in step S201, in a case where it has not been determined that the information processing apparatus 10 is in the stationary state, the state determination unit 141 resets the count of the elapsed time (S205), and determines that it is impossible to acquire temperature characteristic data (S219). As a result, the processing of step S200 is terminated.

Return to the processing of step S203. It is determined whether or not 30 minutes or more have elapsed in the stationary state after the elapsed time has been counted (S207). In a case where it has not been determined that 30 minutes or more have elapsed in the stationary state, the state determination unit 141 determines that it is impossible to acquire temperature characteristic data (S219), and the processing of step S200 is terminated.

In contrast, in step S207, in a case where it has been determined that 30 minutes or more have elapsed in the stationary state, then, a state of a battery residual amount of the information processing apparatus 10 is detected (S209). The state determination unit 141 determines whether or not the battery residual amount of the information processing apparatus 10 satisfies predetermined conditions, on the basis of a battery state detected in step S209 (S211). Examples

9

of the predetermined conditions include whether or not the battery residual amount is greater than or equal to 80% of a battery residual amount in a fully charged state, whether or not a battery is being charged, and the like. In step S211, in a case where it has not been determined that the predetermined conditions are satisfied, it is determined that it is impossible to acquire temperature characteristic data (S219).

In contrast, in step S211, in a case where it has been determined that the predetermined conditions are satisfied, then, a sleeping state of a user is detected (S213). The state determination unit 141 determines whether or not the user is sleeping, on the basis of a detection result in step S213 (S215). In step S215, in a case where it has not been determined that the user is sleeping, it is determined that it is impossible to acquire temperature characteristic data (S219). In contrast, in step S215, in a case where it has been determined that the user is sleeping, it is determined that it is possible to acquire temperature characteristic data (S217).

Note that only any one of or a combination of any two of the respective determination of steps S207, S211, and S215 can be performed. Furthermore, the respective determination of steps S207, S211, and S215 can be performed in an order that is different from an order in the flowchart of Fig. 7.

[1.3.2. Acquisition of temperature characteristic data]

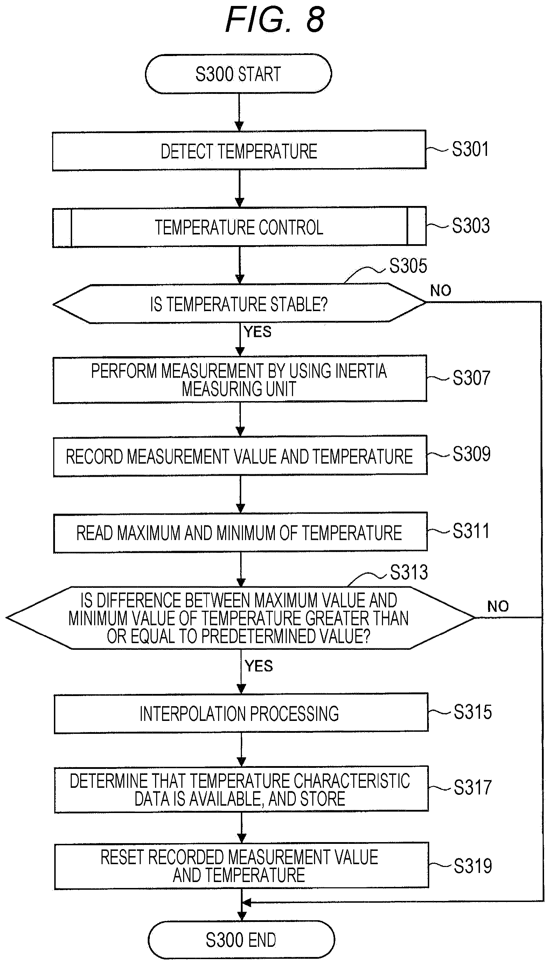

Next, the temperature characteristic data acquisition processing of step S300 in the flowchart of Fig. 6 is described with reference to Fig. 8. Fig. 8 is a flowchart relating to the temperature characteristic data acquisition processing.

First, the temperature detection unit 130 detects a current temperature (S301). Next, the temperature control unit 143 performs temperature control processing (S303). After the temperature control processing described later has been performed, it is determined whether or not temperature has been stabilized (S305). In a case where it has not been determined that temperature has been stabilized, the temperature characteristic data acquisition processing is terminated.

In contrast, in step S305, in a case where it has been determined that temperature has been stabilized, the inertia measuring unit 110 performs measurement at this temperature (S307). For example, the gyroscopic sensor of the inertia measuring unit 110 measures angular velocity with respect to three axes, a yaw axis, a pitch axis, and a roll axis, during a predetermined time period, and moreover, averaging processing is performed on measurement results. An example of a measurement time period is 10 minutes. Thereafter, a mean value of the measurement results and a temperature at which measurement has been performed are stored in the storage 150 (S309).

Next, the data acquisition unit 145 reads, from the storage 150, the maximum value and the minimum value of temperatures that have been already stored (S311). The data acquisition unit 145 determines whether or not a difference between the maximum value and the minimum value is greater than or equal to a predetermined value (S313). An example of the predetermined value is 20°C. In step S313, in a case where it has not been determined that a difference between the maximum value and the minimum value is greater than or equal to a predetermined value, the temperature characteristic data acquisition processing is terminated.

In contrast, in step S313, in a case where it has been determined that a difference between the maximum value and the minimum value is greater than or equal to a predetermined value, then, the data acquisition unit 145 performs interpolation processing for interpolating a measurement result for a temperature with no measurement results (S315). Specifically, the data acquisition unit 145 acquires an approximate function on the basis of a measurement value and a temperature that have been recorded by using the least-squares method, and a measurement result is interpolated. Thereafter, the data acquisition unit 145 determines that temperature characteristic data obtained as the approximate function is available. Moreover, the data acquisition unit 145 stores the temperature characteristic data in the storage 150 (S317). Finally, the data acquisition unit 145 deletes a measurement value of the inertia measuring unit 110 and a temperature that have been transitorily recorded (S319), and the temperature characteristic data acquisition processing is terminated.

[1.3.3. Temperature control]

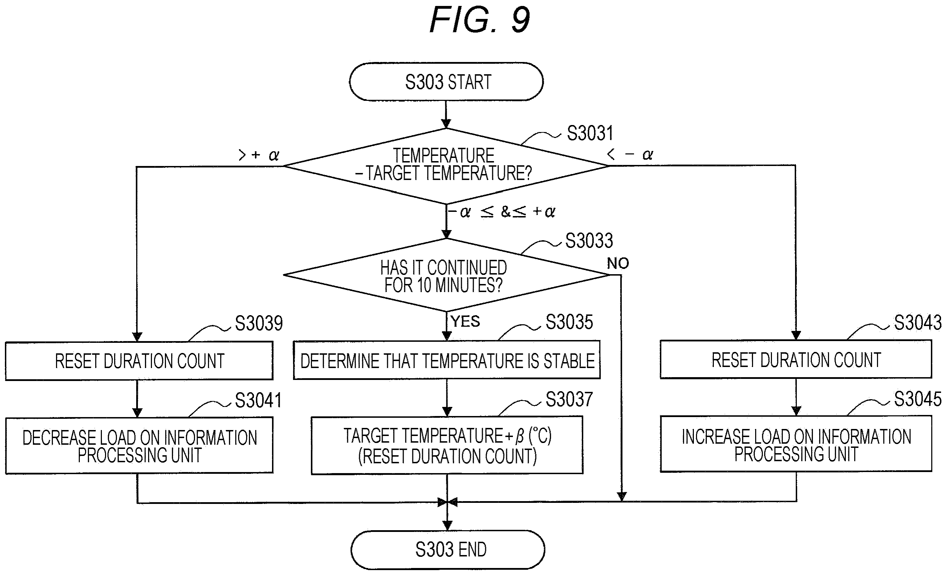

Next, the temperature control processing of step S303 in the flowchart of Fig. 8 is described with reference to Fig. 9. Fig. 9 is a flowchart relating to the temperature control processing. As illustrated in Fig. 9, first, in step S3031, the temperature control unit 143 calculates a value obtained by subtracting a target temperature from a current temperature. Moreover, the temperature control unit 143 compares a value after subtraction with a predetermined temperature-difference absolute value $\alpha$ (°C). An example of the temperature-difference absolute value $\alpha$ is 0.1°C. In a case where the value obtained by subtracting the target temperature from the current temperature is greater than or equal to $-\alpha$, and is less than or equal to $\alpha$, the value is sufficiently close to the target temperature, and therefore the processing moves on to the determination of step S3033.

In step S3033, the temperature control unit 143 determines whether or not a state where the value is sufficiently close to the target temperature has continued for 10 minutes or more. In a case where the state has continued for 10 minutes or more, the temperature control unit 143 determines that temperature has been stabilized (S3035). Moreover, the temperature control unit 143 sets a next target temperature by adding a predetermined temperature β (°C) to a current target temperature (S3037). An example of the predetermined temperature β is 5°C. At this time, the temperature control unit 143 also resets a count of a duration. In contrast, in step S3033, in a case where it has not been determined that a state where the value is sufficiently close to the target temperature has continued for 10 minutes or more, the temperature control processing of step S303 is terminated.

In step S3031, in a case where the value obtained by subtracting the target temperature from the current temperature is greater than +α, the current temperature is higher than the target temperature. Accordingly, first, the temperature control unit 143 resets a count of a duration (S3039). Next, the temperature control unit 143 decreases a load to be applied to the information processing unit 120 (S3041). Thereafter, the temperature control processing of step S303 is terminated.

In contrast, in step S3031, in a case where the value obtained by subtracting the target temperature from the current temperature is less than -α, the current temperature is lower than the target temperature. Accordingly, first, the temperature control unit 143 resets a count of a duration (S3043). Next, the temperature control unit 143 increases a load to be applied to the information processing unit 120 (S3045). Thereafter, the temperature control processing of step S303 is terminated.

[1.3.4. Correction processing]

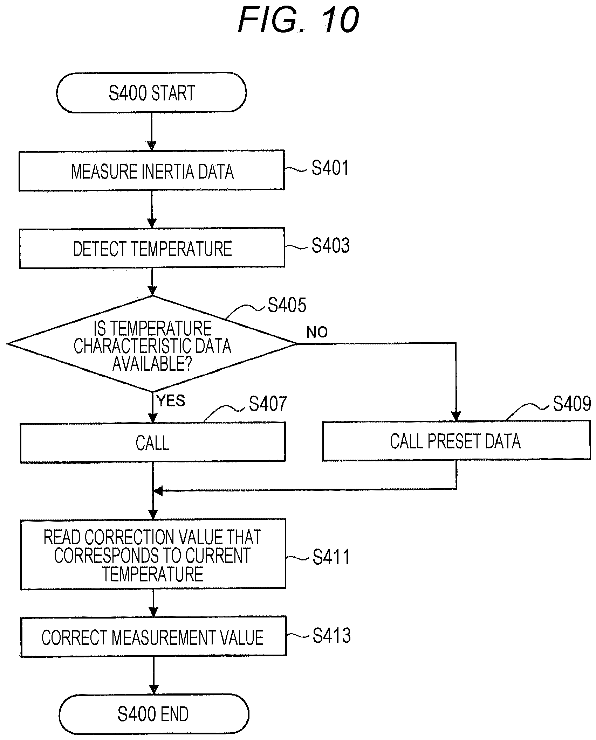

Next, the correction processing of step S400 in the flowchart of Fig. 6 is described with reference to Fig. 10. Fig. 10 is a flowchart relating to the correction processing. As illustrated in Fig. 10, first, the inertia measuring unit 110 measures inertia data (S401). Next, the temperature detection unit 130 detects temperature (S403). Then, the correction processing unit 147 determines whether or not temperature characteristic data is available (S405). If the temperature characteristic data acquisition processing of step S300 has been terminated, and temperature characteristic data is available, the correction processing unit 147 calls the temperature characteristic data from the storage 150 (S407). In contrast, in step S405, in a case where it has not been determined that temperature characteristic data is available, the correction processing unit 147 calls preset data serving as a general temperature characteristic that has been prepared at the time of factory shipping (S409). The correction processing unit 147 reads a correction value on the basis of the called temperature characteristic data and the temperature detected in step S403 (S411). Moreover, the correction processing unit 147 corrects a measurement value obtained in the measurement of step S401, by using the correction value (S413). Thereafter, the correction processing is terminated.

The processing in step S200, step S300, step S303, or step S400 in the flowchart illustrating an operation example of the information processing apparatus 10 according to the embodiment of the present disclosure has been described above.

[1.4. Variation 1 (the case of no temperature measurement results)]

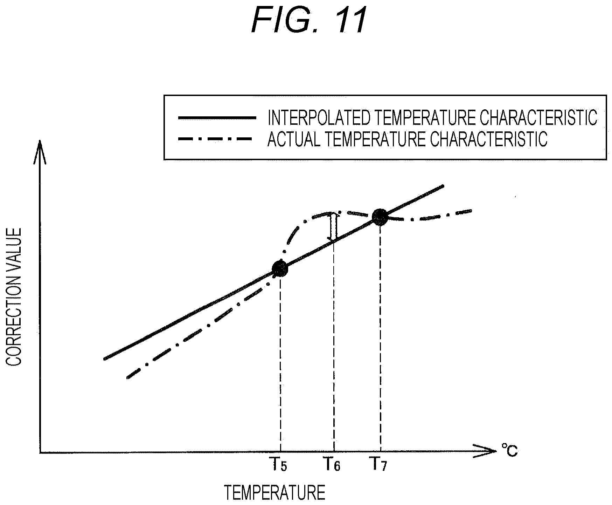

A first variation according to the embodiment of the present disclosure is described below with reference to Fig. 11. Fig. 11 is an explanatory diagram illustrating temperature control in correction processing in the present variation.

In the embodiment described above, an example where temperature characteristic data has been acquired in advance and a measurement value of the inertia measuring unit 110 is corrected on the basis of the temperature characteristic data has been described. In the present variation, the correction processing unit 147 performs correction processing in a state where temperature is controlled by the temperature control unit 143.

As illustrated with a solid line in Fig. 11, in performing correction processing by using temperature characteristic data obtained by approximating a relationship between a measurement value and temperature by using a linear function, in some cases, correction is performed in a temperature range without measurement results in practice. For example, in a case where a temperature detected by the temperature detection unit 130 in Fig. 11 is temperature $T_6$ illustrated in Fig. 11, a correction value that corresponds to temperature $T_6$ is determined on the basis of the temperature characteristic data illustrated with a solid line in Fig. 11. At this time, in some cases, a correction value at temperature $T_6$ deviates from a correction value required to correct an actual measurement value of the inertia measuring unit 110. For example, in some cases, an actual temperature characteristic indicates a partial curve, as illustrated in a broken line in Fig. 11. As a result, a difference is generated between a correction value obtained from temperature characteristic data and a correction value based on an actual temperature characteristic (this corresponds to a range illustrated with a double-headed arrow in Fig. 11) .

Accordingly, in the present variation, in performing correction processing, in a case where a temperature detected by the temperature detection unit 130 is a temperature without measurement results at the time of acquisition of temperature characteristic data, the temperature control unit 143 controls temperature, and correction processing is performed. Specifically, in correction processing, in a case where a temperature detected by the temperature detection unit 130 is temperature $T_6$ in Fig. 11, the temperature control unit 143 performs temperature control to change temperature to temperature $T_7$.

Control is performed to change a temperature detected by the temperature detection unit 130 to a temperature with measurement results at the time of acquisition of temperature characteristic data, and therefore a measurement value of the inertia measuring unit 110 can be corrected more accurately. As a result, a position/orientation estimation function using the inertia measuring unit 110 in the information processing apparatus 10 operates more accurately.

Furthermore, under an actual environment, it is conceivable that an ambient temperature of the inertia measuring unit 110 suddenly changes and this affects measurement performed by the inertia measuring unit 110. Even in such a case, the temperature control unit 143 controls temperature, and this suppresses an influence of a sudden change in ambient temperature on measurement performed by the inertia measuring unit 110.

[1.5. Variation 2 (two-plane measurement)]

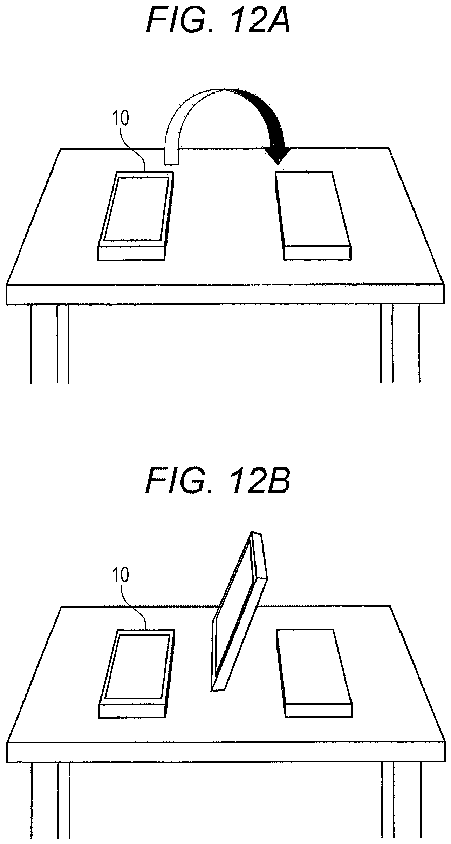

A second variation according to the embodiment of the present disclosure is described below with reference to Fig. 12A. Fig. 12A is an explanatory diagram illustrating a change in orientation in the present variation.

In the embodiment described above, an example of acquiring temperature characteristic data in a state where the information processing apparatus 10 is stationary to have a single orientation has been described. In the present variation, in a state where temperature is controlled, the information processing apparatus 10 is changed from a first orientation to a second orientation, and a measurement value of the inertia measuring unit 110 in each of the orientations is acquired. As a result, temperature characteristic data indicating a relationship between a correction value for correcting an influence of a bias value or a scale factor of the acceleration sensor and temperature is acquired.

As illustrated in Fig. 12A, first, in a state where the information processing apparatus 10 is placed on a desk to have a first orientation, a temperature inside the information processing apparatus 10 is controlled. At this time, a measurement value of the inertia measuring unit 110 is acquired. Next, in a state where temperature is controlled, the information processing apparatus 10 is placed on the desk to have a second orientation inverted from the first orientation. At this time, a measurement value of the inertia measuring unit 110 is acquired.

As described above, a measurement value of the inertia measuring unit 110 is acquired in the first orientation and the second orientation in a state where temperature is controlled, and therefore a correction value for correcting an influence of a bias value and a scale factor of the acceleration sensor on the measurement value is acquired. Stated another way, the inertia measuring unit 110 performs measurement in each of the first orientation and the second orientation, and both measurement values of the acceleration sensor are compared with each other. At this time, a gravitational acceleration component is included in measurement values of the acceleration sensor in both the first orientation and the second orientation. Accordingly, when measurement values in the first orientation and the second orientation of the gravitational acceleration component are compared with each other, an influence of the bias value and the scale factor in the acceleration sensor is obtained. Measurement is repeated on the two planes described above at a plurality of temperatures, and therefore temperature characteristic data indicating a relationship between a correction value for correcting an influence of the bias value or the scale factor on a measurement value of the acceleration sensor and temperature can be obtained.

In the present variation, in acquiring temperature characteristic data, the temperature characteristic data is acquired on the basis of measurement values of the inertia measuring unit 110 in two orientations. Therefore, temperature characteristic data required to correct an influence of the bias value or the scale factor of the acceleration sensor can be easily acquired.

[1.6. Variation 3 (multi-orientation measurement)]

A third variation according to the embodiment of the present disclosure is described below with reference to Fig. 12B. Fig. 12B is an explanatory diagram illustrating a change in orientation in the present variation.

In the embodiment described above, an example of acquiring temperature characteristic data in a state where the information processing apparatus 10 is stationary has been described. In the present variation, in a state where temperature is controlled, the information processing apparatus 10 is changed in three or more orientations, and a measurement value of the inertia measuring unit 110 is acquired at the time of changing to each of the orientations. As a result, temperature characteristic data indicating a relationship between a correction value for correcting an influence of a scale factor of the gyroscopic sensor on a measurement value and temperature is acquired.

As illustrated in Fig. 12B, first, the information processing apparatus 10 is changed to a second orientation from a state where the information processing apparatus 10 is held in a first orientation. At the time of changing from the first orientation to the second orientation, a measurement value of the inertia measuring unit 110 is acquired. Next, the information processing apparatus 10 is changed from the second orientation to a third orientation. At the time of changing from the second orientation to the third orientation, a measurement value of the inertia measuring unit 110 is acquired. Moreover, the information processing apparatus 10 is changed from the third orientation to the first orientation. At the time of changing from the third orientation to the first orientation, a measurement value of the inertia measuring unit 110 is acquired.

Note that, as a reference value with respect to a change amount of an angle at the time of changing an orientation, a gravity direction in each of the orientations is used. Stated another way, a change amount of an angle of the information processing apparatus 10 according to a change in orientation is obtained on the basis of a gravity direction before a change in orientation and a gravity direction after a change in orientation.

As described above, when the orientation of the information processing apparatus 10 changes to a plurality of states, the inertia measuring unit 110 performs measurement in respective orientation variations, and an output value with respect to angular velocity is obtained. As a result, an influence of a scale factor on a measurement value of the gyroscopic sensor is obtained. Measurement is repeated in the multiple orientations described above at a plurality of temperatures, and therefore temperature characteristic data indicating a relationship between a correction value for correcting an influence of the scale factor of the gyroscopic sensor of the inertia measuring unit 110 and temperature can be obtained.

Moreover, in the present variation, when the information processing apparatus 10 is changed to three or more orientations including the first orientation, the second orientation, and the third orientation, measurement results of the gyroscopic sensor and the acceleration sensor in each of the orientations can also be acquired. As a result, three-axis orthogonality of the yaw axis, the pitch axis, and the roll axis of each of the measurement results is obtained. Accordingly, temperature characteristic data for correcting an influence of misalignment on measurement values of the gyroscopic sensor and the acceleration sensor is also acquired.

In the present variation, temperature characteristic data is acquired on the basis of measurement values of the inertia measuring unit 110 in a change in orientation among a plurality of orientations. Therefore, temperature characteristic data required to correct an influence of a scale factor of the gyroscopic sensor or an influence of misalignment of the gyroscopic sensor or the acceleration sensor can be acquired.

[1.7. Variation 4 (display of attention screen)]

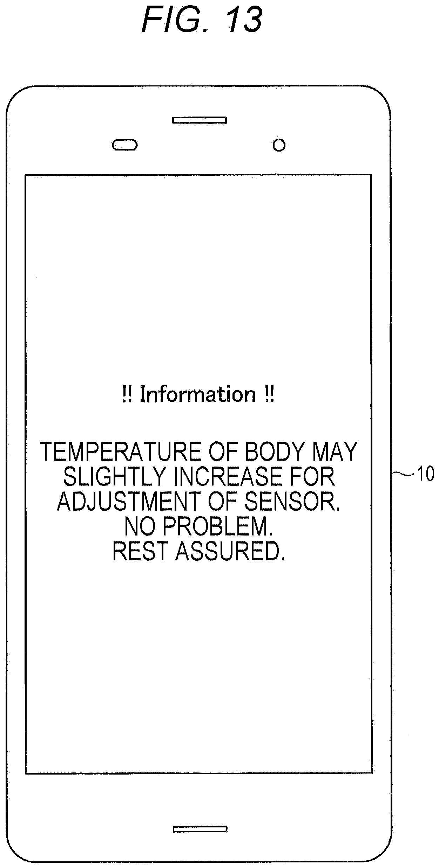

A fourth variation according to the embodiment of the present disclosure is described below with reference to Fig. 13. Fig. 13 is a diagram illustrating an example of an attention screen that is used in the present variation.

In the embodiment described above, in a case where the information processing apparatus 10 satisfies predetermined conditions, the temperature control unit 143 starts temperature control in order to acquire temperature characteristic data. In the present variation, before the temperature control unit 143 starts temperature control, an output device of the information processing apparatus 10 is caused to display a screen for attracting a user's attention. As illustrated in Fig. 13, in the information processing apparatus 10, a screen is displayed to report to a user that a temperature of a body of the information processing apparatus 10 will increase due to temperature control.

In the present variation, before the temperature control unit 143 starts temperature control, a screen for calling a user's attention is displayed. Therefore, temperature control at the time of acquiring temperature characteristic data can be performed in a state where the information processing apparatus 10 has been stabilized.

<2. Hardware configuration example>

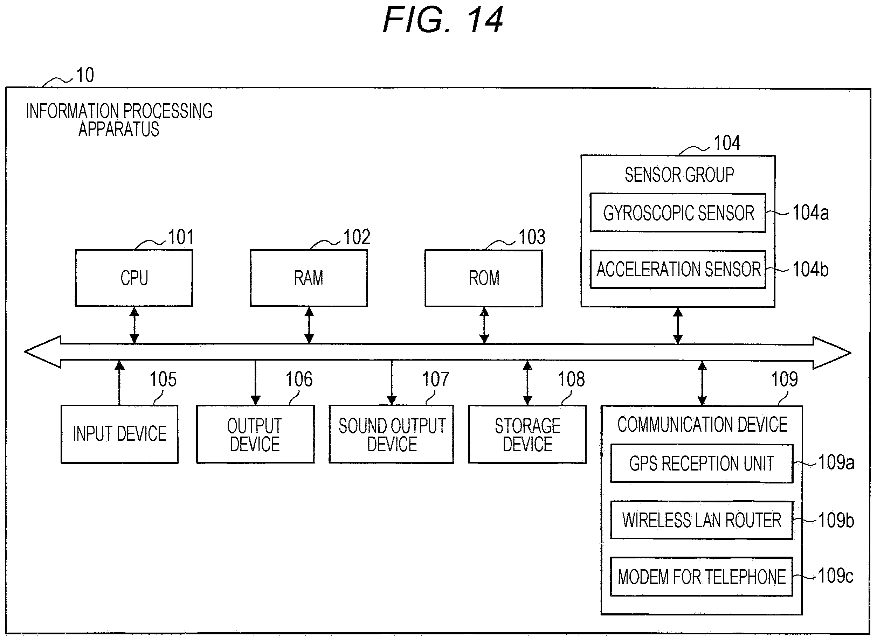

A hardware configuration example of the information processing apparatus 10 according to the embodiment of the present disclosure is described below with reference to Fig. 14. Fig. 14 is a block diagram illustrating a hardware configuration example of the information processing apparatus 10 according to the embodiment of the present disclosure. As illustrated in Fig. 14, the information processing apparatus 10 includes, for example, a CPU 101, a RAM 102, a ROM 103, a sensor group 104, an input device 105, a display device 106, a sound output device 107, a storage device 108, and a communication device 109. Note that the hardware configuration described here is an example, and some of the components can be omitted. Furthermore, a hardware configuration may further include components other than the components described here.

(CPU 101, RAM 102, and ROM 103)

The CPU 101 functions, for example, as an arithmetic processing device or a control device, and controls the entirety or part of an operation of each of the components on the basis of various programs recorded in the ROM 103, the RAM 102, or the storage device 108. The ROM 103 is means for storing a program to be loaded into the CPU 101, data to be used in an arithmetic operation, or the like. For example, the program to be loaded into the CPU 101, various parameters that appropriately change at the time of executing the program, or the like are transitorily or permanently stored in the RAM 102. These are mutually connected by a host bus including a CPU bus or the like. The CPU 101, the ROM 103, and the RAM 102 can achieve the functions of the control unit 140 and the information processing unit 120 that have been described with reference to Fig. 2, for example, in cooperation with software.

(Sensor group 104)

The sensor group 104 has a function of detecting a state, a peripheral environment, or the like of the information processing apparatus 10. The sensor group 104 includes, for example, a gyroscopic sensor 104a and an acceleration sensor 104b. Furthermore, the sensor group 104 includes a temperature sensor.

(Input device 105)

For example, a touch panel, a button, a switch, and the like are used for the input device 105. Moreover, in some cases, a remote controller that can transmit a control signal by using infrared rays or other radio waves is used for the input device 105. Furthermore, the input device 105 includes a sound input device such as a microphone.

(Display device 106 and sound output device 107)

The display device 106 includes, for example, a display device such as a cathode ray tube (CRT) display device or a liquid crystal display (LCD) device. Furthermore, the display device 106 includes a display device such as a projector device, an organic light emitting diode (OLED) device, or a lamp. Furthermore, the sound output device 107 includes a sound output device such as a speaker or a headphone.

(Storage device 108)

The storage device 108 is a device that stores various types of data. As the storage device 108, for example, a magnetic storage device such as a hard disk drive (HDD), a semiconductor storage device, an optical storage device, a magneto-optical storage device, or the like is used. The storage device 108 can achieve, for example, the function of the storage 150 that has been described with reference to Fig. 2.

(Communication device 109)

The communication device 109 is a communication device that performs communication with an outside, and includes a GPS reception unit 109a, a wireless LAN router 109b, and a modem for telephone 109c. In addition, for example, a communication card for a wired or wireless LAN, Bluetooth (registered trademark), or a wireless USB (WUSB), a router for optical communication, a router for an asymmetric digital subscriber line (ADSL), a model for various types of communication, or the like is also included. The communication device 109 can achieve the function of the information processing unit 120, for example, in cooperation with the software.

A hardware configuration example of an information processing apparatus according to an embodiment of the present disclosure has been described above with reference to Fig. 14.

<3. Conclusion>

As described above, in an information processing apparatus according to an embodiment of the present disclosure, a temperature control unit changes temperature in accordance with the operation of an information processing unit to which a load has been applied. Furthermore, a data acquisition unit acquires temperature characteristic data indicating a relationship between a measurement value of an inertia measuring unit and temperature.

Therefore, an information processing apparatus, an information processing method, and a program are provided that are novel and have been improved and that are capable of simply acquiring a temperature characteristic that can cope with a difference in performance among respective products of an inertial sensor, without recording in advance a temperature characteristic of the inertial sensor.

A preferred embodiment of the present disclosure has been described in detail above with reference to the attached drawings. However, the technical scope of the present disclosure is not limited to the examples described above. It is obvious that a person with ordinary skill in the art to which the present disclosure pertains could conceive a variety of changes or modifications without departing from a technical idea described in the claims, and it should be understood that these also fall under the technical scope of the present disclosure.

For example, in the embodiment described above, it is assumed that acquired temperature characteristic data is used in the information processing apparatus 10, but the present technology is not limited to this example. For example, temperature characteristic data acquired by the information processing apparatus 10 can be accumulated in a server computer, and can be shared with another information processing apparatus or the like. Specifically, in the information processing apparatus 10, temperature characteristic data is acquired by the data acquisition unit 145, and the data is stored in the storage 150. The control unit 140 of the information processing apparatus 10 transmits the temperature characteristic data stored in the storage 150 to an external server computer via the Internet or the like. The server computer accumulates temperature characteristic data received from a plurality of information processing apparatuses 10. Furthermore, the server computer selects optimum temperature characteristic data from the accumulated pieces of temperature characteristic data in response to a request from an information processing apparatus 10, and transmits the optimum temperature characteristic data to the information processing apparatus 10 that has made the request.

Furthermore, a series of processing performed by respective devices that has been described herein can be implemented by using any of software, hardware, and a combination of software and hardware. A program that configures software is stored in advance, for example, in a recording medium (a non-transitory medium) that is provided inside or outside each of the devices. Then, for example, each of the programs is loaded into a RAM at the time of execution performed by a computer, and is executed by a processor such as a CPU.

Furthermore, the processing described with reference to flowcharts herein does not necessarily need to be performed in the illustrated order. Some processing steps may be performed in parallel. Furthermore, an additional processing step may be employed, and some processing steps may be omitted.

Furthermore, the effects described herein are only exemplary or illustrative, and are not restrictive. Stated another way, a technology according to the present disclosure can exhibit other effects that would be obvious to those skilled in the art from the description provided herein in addition to the effects described above or instead of the effects described above.

Note that the configuration described below also falls under the technical scope of the present disclosure.

(1) An information processing apparatus including:

an inertia measuring unit;
an information processing unit that performs arithmetic processing that is accompanied by a change in temperature according to a load during operation;
a temperature detection unit that detects temperature;
a temperature control unit that controls the temperature detected by the temperature detection unit by applying the load to the information processing unit to cause the information processing unit to operate; and
a data acquisition unit that acquires temperature characteristic data indicating a relationship between a correction value and the temperature, the correction value being used to correct a measurement value of the inertia measuring unit.

(2) The information processing apparatus according to (1) described above, further including a correction processing unit that corrects the measurement value measured by the inertia measuring unit, on the basis of the correction value obtained from the temperature detected by the temperature detection unit and the temperature characteristic data.

(3) The information processing apparatus according to (1) or (2) described above, further including a state determination unit that determines whether or not the information processing apparatus is in a state where it is possible to acquire the temperature characteristic data,

in which the temperature control unit starts to control the temperature in a case where the state determination unit has determined that the information processing apparatus is in the state where it is possible to acquire the temperature characteristic data.

(4) The information processing apparatus according to (3) described above, in which, in determining whether or not it is possible to acquire the temperature characteristic data, the state determination unit performs determination as to at least any one of whether or not the information processing apparatus is stationary, whether or not the information processing apparatus is being used by a user, or whether or not a battery residual amount of the information processing apparatus satisfies predetermined conditions.

(5) The information processing apparatus according to any one of (1) to (4) described above, in which the temperature control unit controls the information processing unit to keep the temperature constant during a predetermined time period.

(6) The information processing apparatus according to any one of (1) to (5) described above, in which the temperature control unit controls the information processing unit to cause the temperature to change from a first temperature to a second temperature at a temperature change speed in which the temperature is less than or equal to a threshold.

(7) The information processing apparatus according to any one of (1) to (6) described above, in which the temperature control unit controls the information processing unit to cause a minimum value and a maximum value of the temperature to have a temperature difference that is at least greater than or equal to a predetermined value.

(8) The information processing apparatus according to any one of (1) to (7) described above, in which the data acquisition unit acquires, as the temperature characteristic data, an approximate function of a plurality of the measurement values that have been acquired by the inertia measuring unit at at least two or more temperatures.

(9) The information processing apparatus according to any one of (1) to (8) described above,

in which the inertia measuring unit includes at least a gyroscopic sensor that detects angular velocity, and the data acquisition unit acquires gyroscopic bias temperature characteristic data indicating a relationship between a gyroscopic bias correction value and the temperature.

(10) The information processing apparatus according to (9) described above, further including a gyroscopic correction processing unit that corrects the angular velocity detected by the gyroscopic sensor on the basis of the gyroscopic bias correction value obtained from the temperature detected by the temperature detection unit and the gyroscopic bias temperature characteristic data.

(11) The information processing apparatus according to (2) described above, in which in a state where the temperature is controlled by applying, by the temperature control unit, the load to the information processing unit to cause the information processing unit to operate, the correction processing unit corrects the measurement value measured by the inertia measuring unit, on the basis of a correction value obtained from the temperature that has been controlled and the temperature characteristic data.

(12) The information processing apparatus according to any one of (1) to (11) described above, in which the information processing unit includes at least any one of a central processing unit or a communication device.

(13) An information processing method including:

controlling, by using a processor, a temperature detected by a temperature detection unit, by applying a predetermined load to an information processing unit to cause the information processing unit to operate, the information processing unit performing arithmetic processing that is accompanied by a change in temperature according to a load during operation; and
acquiring temperature characteristic data indicating a relationship between a correction value and the temperature, the correction value being used to correct a measurement value of an inertia measuring unit.

(14) A program that causes a computer to have a function including:

an inertia measuring unit;
an information processing unit that changes in temperature in accordance with a load during operation;
a temperature detection unit that detects temperature;
a temperature control unit that controls the temperature detected by the temperature detection unit by applying the load to the information processing unit to cause the information processing unit to operate; and
a data acquisition unit that acquires temperature characteristic data indicating a relationship between a correction value and the temperature, the correction value being used to correct a measurement value of the inertia measuring unit.

REFERENCE SIGNS LIST

10      Information processing apparatus
101     CPU
102     RAM
103     ROM
104     Sensor group
104a    Gyroscopic sensor
104b    Acceleration sensor
109     Communication device
110     Inertia measuring unit
120     Information processing unit
130     Temperature detection unit

| 140 | Control unit |
| 141 | State determination unit |
| 143 | Temperature control unit |
| 145 | Data acquisition unit |
| 147 | Correction processing unit |
| 149 | Gyroscopic correction processing unit |
| 150 | Storage |

**Claims**

1. An information processing apparatus comprising:

   an inertia measuring unit;
   an information processing unit that performs arithmetic processing that is accompanied by a change in temperature according to a load during operation;
   a temperature detection unit that detects temperature;
   a temperature control unit that controls the temperature detected by the temperature detection unit by applying the load to the information processing unit to cause the information processing unit to operate; and
   a data acquisition unit that acquires temperature characteristic data indicating a relationship between a correction value and the temperature, the correction value being used to correct a measurement value of the inertia measuring unit.

2. The information processing apparatus according to claim 1, further comprising a correction processing unit that corrects the measurement value measured by the inertia measuring unit, on a basis of the correction value obtained from the temperature detected by the temperature detection unit and the temperature characteristic data.

3. The information processing apparatus according to claim 1, further comprising a state determination unit that determines whether or not the information processing apparatus is in a state where it is possible to acquire the temperature characteristic data,
   wherein the temperature control unit starts to control the temperature in a case where the state determination unit has determined that the information processing apparatus is in the state where it is possible to acquire the temperature characteristic data.

4. The information processing apparatus according to claim 3, wherein, in determining whether or not it is possible to acquire the temperature characteristic data, the state determination unit performs determination as to at least any one of whether or not the information processing apparatus is stationary, whether or not the information processing apparatus is being used by a user, or whether or not a battery residual amount of the information processing apparatus satisfies predetermined conditions.

5. The information processing apparatus according to claim 1, wherein the temperature control unit controls the information processing unit to keep the temperature constant during a predetermined time period.

6. The information processing apparatus according to claim 1, wherein the temperature control unit controls the information processing unit to cause the temperature to change from a first temperature to a second temperature at a temperature change speed in which the temperature is less than or equal to a threshold.

7. The information processing apparatus according to claim 1, wherein the temperature control unit controls the information processing unit to cause a minimum value and a maximum value of the temperature to have a temperature difference that is at least greater than or equal to a predetermined value.

8. The information processing apparatus according to claim 1, wherein the data acquisition unit acquires, as the temperature characteristic data, an approximate function of a plurality of the measurement values that have been acquired by the inertia measuring unit at at least two or more temperatures.

9. The information processing apparatus according to claim 1,
   wherein the inertia measuring unit includes at least a gyroscopic sensor that detects angular velocity, and
   the data acquisition unit acquires gyroscopic bias temperature characteristic data indicating a relationship between

17

a gyroscopic bias correction value and the temperature.

10. The information processing apparatus according to claim 9, further comprising a gyroscopic correction processing unit that corrects the angular velocity detected by the gyroscopic sensor on a basis of the gyroscopic bias correction value obtained from the temperature detected by the temperature detection unit and the gyroscopic bias temperature characteristic data.

11. The information processing apparatus according to claim 2, wherein in a state where the temperature is controlled by applying, by the temperature control unit, the load to the information processing unit to cause the information processing unit to operate, the correction processing unit corrects the measurement value measured by the inertia measuring unit, on a basis of a correction value obtained from the temperature that has been controlled and the temperature characteristic data.

12. The information processing apparatus according to claim 1, wherein the information processing unit includes at least any one of a central processing unit or a communication device.

13. An information processing method comprising:

controlling, by using a processor, a temperature detected by a temperature detection unit, by applying a predetermined load to an information processing unit to cause the information processing unit to operate, the information processing unit performing arithmetic processing that is accompanied by a change in temperature according to a load during operation; and
acquiring temperature characteristic data indicating a relationship between a correction value and the temperature, the correction value being used to correct a measurement value of an inertia measuring unit.

14. A program that causes a computer to have a function comprising:

an inertia measuring unit;
an information processing unit that changes in temperature in accordance with a load during operation;
a temperature detection unit that detects temperature;
a temperature control unit that controls the temperature detected by the temperature detection unit by applying the load to the information processing unit to cause the information processing unit to operate; and
a data acquisition unit that acquires temperature characteristic data indicating a relationship between a correction value and the temperature, the correction value being used to correct a measurement value of the inertia measuring unit.

# FIG. 1

# FIG. 2

INFORMATION PROCESSING APPARATUS ~10

CONTROL UNIT ~140

STATE DETERMINATION UNIT ~141

TEMPERATURE DETECTION UNIT ~130

TEMPERATURE CONTROL UNIT ~143

INFORMATION PROCESSING UNIT ~120

DATA ACQUISITION UNIT ~145

INERTIA MEASURING UNIT ~110

CORRECTION PROCESSING UNIT ~147

STORAGE ~150

EP 3 862 758 A1

# FIG. 3

# FIG. 4

| TEMPERATURE (°C) | MEASUREMENT VALUE OF INERTIA MEASURING UNIT |
|---|---|
| 25 | A |
| 30 | B |
| 35 | C |

# FIG. 5

# FIG. 6

```
          ┌─────────────┐
          │    START    │
          └──────┬──────┘
                 │
                 ▼
   ┌──────────────────────────────────┐
   │  MEASURE BY USING IMU, AND STORE │──── S100
   └─────────────────┬────────────────┘
                     │
                     ▼
   ┌──────────────────────────────────┐
   │  TEMPERATURE CHARACTERISTIC DATA │──── S200
   │ ACQUISITION POSSIBILITY DETERMINATION │
   └─────────────────┬────────────────┘
                     │
                     ▼
              S220
         ╱─────────────────╲
        ╱   IS IT POSSIBLE  ╲     NO      ┌──────────────────────────┐
       ⟨ TO ACQUIRE TEMPERATURE⟩─────────▶│ RESET COUNT OF TEMPERATURE│── S221
        ╲ CHARACTERISTIC DATA?╱           │ STABILITY ELAPSED TIME    │
         ╲─────────────────╱              └────────────┬─────────────┘
                 │ YES                                  │
                 ▼  S300                                │
   ┌──────────────────────────────────┐                │
   │    TEMPERATURE CHARACTERISTIC    │                │
   │       DATA ACQUISITION           │                │
   └─────────────────┬────────────────┘                │
                     │◀───────────────────────────────┘
                     ▼
   ┌──────────────────────────────────┐
   │       CORRECTION PROCESSING      │──── S400
   └─────────────────┬────────────────┘
                     │
                     ▼
   ┌──────────────────────────────────┐
   │   CALCULATE VARIOUS ORIENTATIONS │──── S500
   │            AND SPEED             │
   └─────────────────┬────────────────┘
                     │
                     ▼
              ┌─────────────┐
              │     END     │
              └─────────────┘
```

# FIG. 7

S200 START

S201
STATIONARY? —— NO

YES
S203
COUNT ELAPSED TIME

S205
RESET COUNT

S207
HAS IT BEEN STATIONARY
FOR 30min OR MORE? —— NO

YES
DETECT BATTERY STATE —— S209

S211
ARE PREDETERMINED
CONDITIONS SATISFIED? —— NO

YES
DETECT SLEEPING STATE —— S213

S215
SLEEPING? —— NO

YES
S217
DETERMINE THAT ACQUISITION
IS POSSIBLE

S219
DETERMINE THAT ACQUISITION
IS IMPOSSIBLE

S200 END

## FIG. 8

```
                    ╭─────────────────╮
                    │   S300 START    │
                    ╰─────────────────╯
                             │
                             ▼
        ┌─────────────────────────────────────┐
        │        DETECT TEMPERATURE           │─── S301
        └─────────────────────────────────────┘
                             │
                             ▼
        ┌─┬─────────────────────────────────┬─┐
        │ │      TEMPERATURE CONTROL        │ │─── S303
        └─┴─────────────────────────────────┴─┘
                             │            S305
                             ▼
        ╱─────────────────────────────────────╲      NO
        ╲      IS TEMPERATURE STABLE?         ╱──────────┐
          ╲─────────────────────────────────╱           │
                             │ YES                       │
                             ▼                           │
        ┌─────────────────────────────────────┐         │
        │ PERFORM MEASUREMENT BY USING INERTIA │─── S307 │
        │            MEASURING UNIT            │         │
        └─────────────────────────────────────┘         │
                             │                           │
                             ▼                           │
        ┌─────────────────────────────────────┐         │
        │ RECORD MEASUREMENT VALUE AND TEMPERATURE │─ S309│
        └─────────────────────────────────────┘         │
                             │                           │
                             ▼                           │
        ┌─────────────────────────────────────┐         │
        │ READ MAXIMUM AND MINIMUM OF TEMPERATURE │─ S311 │
        └─────────────────────────────────────┘         │
                             │            S313           │
                             ▼                           │
        ╱─────────────────────────────────────╲   NO    │
        │ IS DIFFERENCE BETWEEN MAXIMUM VALUE AND │───────┤
        │ MINIMUM VALUE OF TEMPERATURE GREATER THAN│      │
        ╲ OR EQUAL TO PREDETERMINED VALUE?     ╱         │
          ╲─────────────────────────────────╱           │
                             │ YES                       │
                             ▼                           │
        ┌─────────────────────────────────────┐         │
        │       INTERPOLATION PROCESSING      │─── S315  │
        └─────────────────────────────────────┘         │
                             │                           │
                             ▼                           │
        ┌─────────────────────────────────────┐         │
        │ DETERMINE THAT TEMPERATURE CHARACTERISTIC │─S317│
        │      DATA IS AVAILABLE, AND STORE   │         │
        └─────────────────────────────────────┘         │
                             │                           │
                             ▼                           │
        ┌─────────────────────────────────────┐         │
        │ RESET RECORDED MEASUREMENT VALUE    │─── S319  │
        │          AND TEMPERATURE            │         │
        └─────────────────────────────────────┘         │
                             │◄──────────────────────────┘
                             ▼
                    ╭─────────────────╮
                    │    S300 END     │
                    ╰─────────────────╯
```

*FIG. 9*

# FIG. 10

```
┌─────────────────────────┐
│       S400 START        │
└─────────────────────────┘
             │
             ▼
┌─────────────────────────┐
│   MEASURE INERTIA DATA   │─── S401
└─────────────────────────┘
             │
             ▼
┌─────────────────────────┐
│    DETECT TEMPERATURE    │─── S403
└─────────────────────────┘
             │
             ▼
          ╱─────╲   S405
       ╱           ╲
    ╱   IS TEMPERATURE ╲        NO
   ╱  CHARACTERISTIC DATA ╲──────────────────┐
    ╲     AVAILABLE?     ╱                    │
       ╲              ╱                       │
          ╲  YES  ╱                           │
             │  S407                          │  S409
             ▼                                ▼
┌─────────────────────────┐    ┌─────────────────────────┐
│          CALL           │    │     CALL PRESET DATA     │
└─────────────────────────┘    └─────────────────────────┘
             │                                │
             ◄────────────────────────────────┘
             ▼
┌─────────────────────────┐
│  READ CORRECTION VALUE THAT │
│  CORRESPONDS TO CURRENT  │─── S411
│       TEMPERATURE        │
└─────────────────────────┘
             │
             ▼
┌─────────────────────────┐
│ CORRECT MEASUREMENT VALUE │─── S413
└─────────────────────────┘
             │
             ▼
┌─────────────────────────┐
│        S400 END          │
└─────────────────────────┘
```

# FIG. 11

# FIG. 12A

# FIG. 12B

# FIG. 13

!! Information !!

TEMPERATURE OF BODY MAY
SLIGHTLY INCREASE FOR
ADJUSTMENT OF SENSOR.
NO PROBLEM.
REST ASSURED.

~10

*FIG. 14*

EP 3 862 758 A1

## INTERNATIONAL SEARCH REPORT

| International application No. |
|---|
| PCT/JP2019/038251 |

A.  CLASSIFICATION OF SUBJECT MATTER
Int.Cl.  G01P21/00(2006.01)i

According to International Patent Classification (IPC) or to both national classification and IPC

B.  FIELDS SEARCHED

Minimum documentation searched (classification system followed by classification symbols)
Int.Cl.  G01P15/00-21/02, G01C19/00-19/72, G01C25/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | US 2018/0094933 A1 (QUALCOMM INCORPORATED) 05 April 2018, paragraphs [0039]-[0040], [0053]-[0109], fig. 1-4 & CN 109791055 A & WO 2018/067225 A1 | 1-2, 9-14<br>3-8 |
| Y | US 2012/0203488 A1 (LEICA GEOSYSTEMS AG) 09 August 2012, paragraphs [0019]-[0023] & AR 78794 A & AU 2010312307 A & BR PI1012099 A & CA 2765095 A & CN 102472632 A & EP 2494312 A1 & MX 2012003000 A & NZ 596007 A & RU 2011142833 A & UA 106614 C & WO 2011/050395 A1 & ZA 201109248 B | 3-8 |

☒  Further documents are listed in the continuation of Box C.      ☐  See patent family annex.

| | |
|---|---|
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 12 December 2019 (12.12.2019) | 24 December 2019 (24.12.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| | INTERNATIONAL SEARCH REPORT | International application No. |
|---|---|---|
| | | PCT/JP2019/038251 |

C (Continuation).    DOCUMENTS CONSIDERED TO BE RELEVANT

| Category* | Citation of document, with indication, where appropriate, of the relevant passages | Relevant to claim No. |
|---|---|---|
| A | CN 107515013 A (SHANGHAI WENTAI INFORMATION TECH CO., LTD.) 26 December 2017, entire text, all drawings (Family: none) | 1-14 |
| A | US 2016/0252366 A1 (SAMSUNG ELECTRONICS CO., LTD.) 01 September 2016, entire text, all drawings & KR 10-2016-0104247 A | 1-14 |
| A | JP 2008-203155 A (DENSO CORP.) 04 September 2008, entire text, all drawings (Family: none) | 1-14 |

Form PCT/ISA/210 (continuation of second sheet) (January 2015)

**REFERENCES CITED IN THE DESCRIPTION**

**Patent documents cited in the description**

- JP 2010268755 A